# EUROPEAN PATENT SPECIFICATION

(11) **EP 1 921 281 B1**
(45) Date of publication and mention of the grant of the patent: **28.07.2010**
(21) Application number: 07020424.3
(22) Date of filing: 18.10.2007
(51) Int. Cl.: F01K 23/06, F01K 23/10, C02F 1/06, B01D 1/26, B01D 1/00

(54) **Seawater desalinating apparatus using blowdown water of heat recovery steam generator**
Vorrichtung zur Entsalzung von Meerwasser unter Verwendung von Kesselaugen-Wasser eines Abhitze-Dampferzeugers
Appareil de dessalement d'eau de mer utilisant l'eau d'évacuation d'un générateur de vapeur à récupération de chaleur

(30) Priority: 13.11.2006 KR 20060111482
(43) Date of publication of application: 14.05.2008
(73) Proprietor: Doosan Heavy Industries & Construction Co., Ltd., Seocho-Gu Seoul 137-920 (KR)
(72) Inventor: Park, Keum-seo, Gyungsangnam-Do (KR); Song, In-seop, Gyungsangnam-Do (KR); Lim, Jong-sung, Gyungsangnam-Do (KR)
(74) Representative: Beetz & Partner

(56) References cited:
- EP-A- 1 645 613
- CA-A1- 2 414 611
- JP-A- 8 189 307
- JP-A- 10 141 606
- US-A- 3 557 863
- US-A- 4 428 328

## Description

### BACKGROUND OF THE INVENTION

### Field of the Invention

The present invention relates to a seawater desalinating apparatus using blowdown water of a heat recovery steam generator, and, more particularly, to a seawater desalinating apparatus, which employs blowdown water from a heat recovery steam generator in a combined cycle power plant to reduce waste amounts of a medium pressure steam used for a vacuum system of a multi-stage flash plant and a low pressure steam used for a brine heater.

### Description of the Related Art

EP 1 645 613 A discloses a fuel production plant for producing novel fuels, such as GTL and dimethyl ether, combined with a seawater desalination system. The known plant comprises an exhaust heat recovery boiler for generating steam driving steam turbines. The plant further comprises an open circulation cooling system supplying cooling water for the plant including cooling water for cooling the exhaust of the steam turbines, and includes a system for seawater desalination by evaporation. The desalinated water is used to replenish the open circulation cooling water which, in turn, is used in condensing the desalinated water.

CA 2 414 611 A1 relates to a method of recovering heat energy during blowdown of a steam boiler wherein thermal energy is recovered both from flash steam produced by blowdown water and the blowdown water itself. This document does not deal with seawater desalination.

US 4 428 328 A relates to a boiler blowdown heat recovery system wherein blowdown water and fresh water are directed through a heat exchanger, and the volumetric flow of blowdown and fresh water and the energy transferred to the fresh water can be measured and displayed. The system may comprise a flash tank for generating additional steam from the blowdown water prior to heat exchange.

JP 10 141 606 A discloses heat exchange between blowdown water of a steam boiler and condensate in order to save cooling water. This document does not relate to seawater desalination.

JP 08 189 307 A discloses to increase the output of a gas turbine combined with an exhaust heat recovery boiler by flash evaporation of blowdown water and injecting the generated steam in the combustor of the gas turbine. Seawater desalination is not disclosed in this prior art document.

US 3 557 863 A relates to a process and an apparatus for extracting fresh water from saline water by introducing the saline water into a hot, high-pressure gas stream and, then, evaporating it in an evaporation chamber wherein salts and mineral components are separated and fresh water is condensed out of the separated gas mixture by cooling. This document does not disclose seawater desalination.

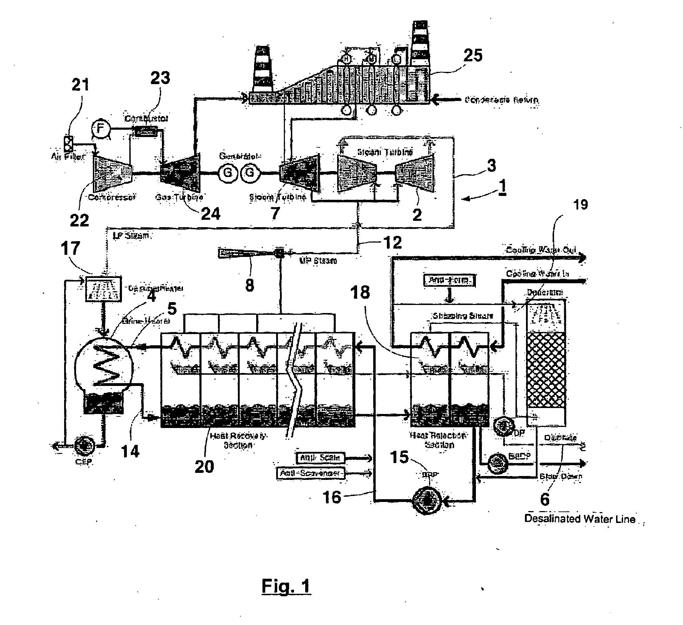

In the following, a combined-cycle power plant will be described comprising a seawater desalination system with reference to Fig. 1.

In a combined cycle power plant 1, a conventional seawater desalinating apparatus is supplied with a low pressure steam from a low pressure steam turbine 2 through a low pressure steam line 3.

In the power plant 1, an air filter 21 purifies air entering a compressor 22, and the compressor 22 serves to compress air acting as an oxidant and to supply the compressed air to a combustor 23 of the compressor 22.

A gas turbine 24 rotates a shaft connected to a generator G by use of a high temperature and high pressure gas, and a heat recovery steam generator 25 produces a high temperature and high pressure steam using the heat amount of the gas discharged from the gas turbine 24.

A steam turbine 7 drives a generator G using the steam discharged from the heat recovery steam generator 25, and supplies a medium pressure steam to a medium pressure steam line 12.

A brine heater 4 serves to heat brine supplied through a brine line 5, and a hot seawater discharged from the brine heater 4 is introduced into an evaporator 20 through 7 ∼ 9 small seawater lines 14 in a distribution header. Water remaining after producing the medium pressure steam is mixed with the hot seawater discharged from the brine heater 4 in the distribution header, and introduced into the evaporator 20.

The seawater introduced into the evaporator 20 is evaporated by pressure reduction ratios while passing through respective stages of the evaporator 20, and cooled again to produce desalinated water, which will be transmitted to a desalinated water line 6.

A device for removing a non-condensable gas upon generation of an initial vacuum at the respective stages and normal operations thereof is a vacuum system, which generates vacuum by use of an ejector 8 after receiving the medium pressure steam from a back pressure steam turbine 7 through the medium pressure steam line 12.

For the heat recovery steam generator of the conventional combined cycle power plant, a high pressure and high temperature blowdown water is partially discharged from a blowdown drum to process contaminants in equipment. Since such a high temperature blowdown water can cause environmental problems, the high temperature blowdown water is mixed with a low temperature seawater, and then discharged in a low temperature state from the plant.

Accordingly, for such a conventional multi-stage flash plant system, the high temperature and high pressure steam generated from the heat recovery steam generator of the combined cycle power plant is reduced in pressure while performing the work through turbines. Here, the medium pressure steam is partially withdrawn and used for the vacuum system at a medium stage turbine, and the low pressure steam is used to heat seawater to produce the desalinated water at the rear stage of a low pressure steam turbine, thereby reducing the efficiency of the power plant while leading to an increase of the fuel waste rate.

Furthermore, since blowdown water discharged from the heat recovery steam generator has a high temperature and high pressure, the blowdown water must be mixed with a great amount of seawater in order to discharge the blowdown water at low temperatures, and thus it is necessary to provide additional equipment.

### SUMMARY OF THE INVENTION

The present invention has been made to solve the above problems, and it is an aspect of the present invention to provide a seawater desalinating apparatus, which is configured to allow a medium pressure steam generated in a flash vessel by use of blowdown water of a heat recovery steam generator to be supplied into a vacuum system, and to allow hot water remaining in the flash vessel to be mixed with seawater discharged from a brine heater.

In accordance with the present invention, the above and other objects can be accomplished by the provision of a seawater desalinating apparatus using blowdown water of a heat recovery steam generator, comprising a brine heater to heat brine with a low pressure steam supplied from a low pressure steam turbine of a combined cycle power plant, the brine being subjected to flash evaporation while the brine passes through respective stages of a multi-stage flash plant via a seawater line to produce desalinated water, a desalinated water line to receive the desalinated water, and a vacuum system including an ejector to generate vacuum with a medium pressure steam supplied from a back pressure steam turbine through a medium pressure steam line; according to the invention, a flash vessel is provided to generate the medium pressure steam by use of the blowdown water of the heat recovery steam generator of the combined cycle power plant, the medium pressure steam is supplied to the medium pressure steam line, and hot water remaining after generation of the medium pressure steam in the flash vessel is mixed with seawater discharged from the brine heater to the seawater line.

According to the invention, the seawater desalinating apparatus using the blowdown water of the heat recovery steam generator can reduce the waste amount of a medium pressure steam used for the vacuum system by 11 % or more, and the waste amount of a low pressure steam used for the brine heater by 0.2 % or more.

### BRIEF DESCRIPTION OF THE DRAWINGS

The foregoing and other objects and features of the present invention will be more clearly understood from the following detailed description taken in conjunction with the accompanying drawings, in which:
Fig. 1 is a view illustrating the construction of a seawater desalinating apparatus using steam from a back pressure steam turbine and a low pressure steam turbine of a conventional combined cycle power plant; and
Fig. 2 is a view illustrating the construction of a seawater desalinating apparatus using blowdown water of a heat recovery steam generator according to the present invention.

### DETAILED DESCRIPTION OF THE PREFERRED EMBODIMENTS

Exemplary embodiments of the present invention will be described in detail with reference to the accompanying drawings, in which like components are denoted by the same reference numerals.

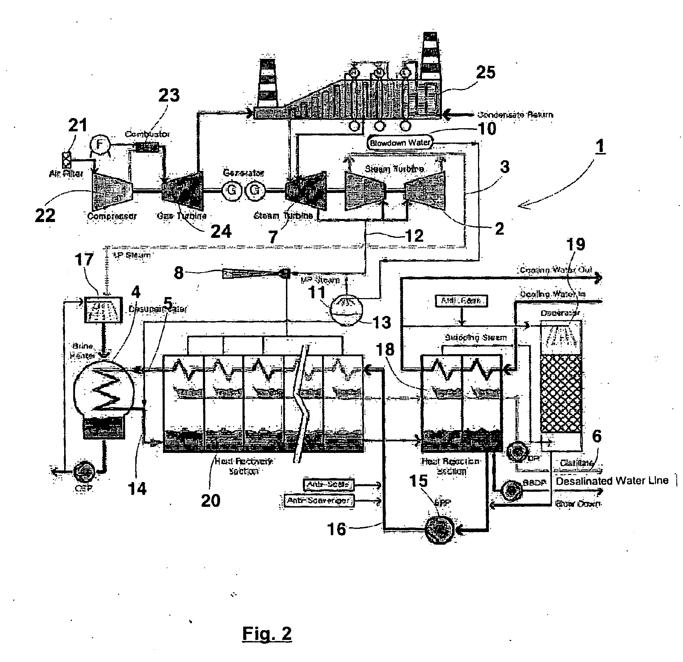

Referring to Fig. 2, a flash vessel 11 generates a medium pressure steam by use of blowdown water 10 of a heat recovery steam generator 25 of a combined cycle power plant, and supplies the medium pressure steam to a medium pressure steam line 12, so that the waste amount of the medium pressure steam used for a vacuum system can be reduced.

The flash vessel 11 produces steam from high temperature and high pressure water through the flash phenomenon, and an ejector 8 serves to generate an initial vacuum in an evaporator 20 and discharge a non-condensable gas upon a normal operation.

In addition, hot water remaining after producing the medium pressure steam in the flash vessel 11 is mixed with seawater in a seawater line 14 discharged from the brine heater 4 to produce water in an evaporator 20.

The brine heater 4 enables heat exchange between a low pressure steam supplied from a heat recovery steam generator 25 and seawater, and a desuperheater 17 adjusts the conditions of the steam supplied from the heat recovery steam generator 25 to meet the requirements of the brine heater 4.

Blowdown water 10 of the heat recovery steam generator 25 is used to produce the medium pressure steam in the flash vessel 11, which is in turn supplied from the medium pressure steam line 12 to the evaporator 20 through the ejector 8. The evaporator 20 heats seawater entering from the brine heater 4 in the evaporator 20 for production of desalinated water in a heat recovery unit, and condenses the steam evaporated in the flash vessel 11.

Brine is supplied by a seawater pump 15 to the evaporator 20, and passes through the brine heater 4. A heat rejection section 18 serves to remove heat from hot water by use of the seawater in the evaporator 20 for production of distilled water, and a deaerator 19 removes gas, such as oxygen, which is a detrimental gas dissolved in the seawater and oxidizes tubes of the evaporator 20.

Hot water in the flash vessel 11 is supplied to the seawater line 14, mixed with the seawater discharged from the brine heater 4, and transmitted to the evaporator 20.

After passing through the evaporator 20, the hot water is supplied to a line 16 by the seawater pump 15.

The blowdown water of the heat recovery steam generator 25 used for the seawater desalinating apparatus of the invention contains ammonia, phosphorus, hydrazine, etc., which are removed by the flash vessel 11.

The blowdown water of the heat recovery steam generator 25 has a temperature of about 310 °C, and a pressure of about 99 bar. As the blowdown water of high temperature and high pressure is introduced into the flash vessel 11 and sprayed therein, some of that blowdown water is evaporated, and the rest remains as water.

The flash vessel 11 is designed to have a temperature of 220 °C and a pressure of about 16 bar, and also serves to remove chemical materials added to water through evaporation during the spraying of the blowdown water.

The remaining hot water free of the chemical materials in the flash vessel 11 is mixed with seawater discharged from the brine heater 4 and produces desalinated water so that a heat amount of remaining hot water is transferred to the seawater, thereby reducing the waste amount of the low pressure steam supplied from equipment of the power plant.

In addition, according to the invention, since blowdown water discharged from the heat recovery steam generator is used for a multi-stage flash plant, it is possible to eliminate associated equipment and apparatus for processing blowdown water of a heat recovery steam generator in the art.

Meanwhile, although the present invention has been described using the evaporator of the multi-stage flash plant as an example, it can be understood that the invention can also be applied to a multi-effect evaporator of a multi-effect distillation (MED) plant.

It should further be understood that the embodiments and the accompanying drawings as described above have been described for illustrative purposes only, and the present invention is defined by the following claims.

## Claims

1. Seawater desalinating apparatus using blowdown water (10) of a heat recovery steam generator (25) of a combined cycle power plant (1), comprising
• a brine heater (4) for heating brine with a low pressure steam supplied from a low pressure steam turbine (2) of a combined cycle power plant (1),
• the brine being subjected to flash evaporation while the brine passes through respective stages of a multi-stage evaporator (20) via a seawater line (14) to produce desalinated water,
• a desalinated water line (6) to receive the desalinated water, and
• a vacuum system including an ejector (8) for generating vacuum with a medium pressure steam supplied from a back pressure steam turbine (7) through a medium pressure steam line (12), **characterized in that**
- a flash vessel (11) is provided to generate medium pressure steam by use of the blowdown water (10) of the heat recovery steam generator (25),
- the medium pressure steam is supplied to the medium pressure steam line (12),
and
- hot water remaining after generation of the medium pressure steam in the flash vessel (11) is mixed with seawater discharged from the brine heater (4) to the seawater line (14).

2. Seawater desalinating apparatus according to claim 1, **characterized in that** the flash vessel (11) is designed to spray and evaporate blowdown water (10) to remove chemical materials added to water for power generation.

## Patentansprüche

1. Vorrichtung zur Entsalzung von Meerwasser unter Verwendung von Kessellaugen-Wasser (10) eines Abhitze-Dampferzeugers (25) eines Kombikraftwerks (1), die aufweist:
• eine Salzwasser-Heizvorrichtung (4) zum Erhitzen von Salzlösung mit einem Niederdruckdampf, der von einer Niederdruck-Dampfturbine (2) eines Kombikraftwerks (1) geliefert wird,
• wobei die Salzlösung einer Flashverdampfung unterworfen wird, während die Salzlösung über eine Meerwasserleitung (14) durch die jeweiligen Stufen eines Mehrstufen-Verdampfers (20) hindurchgeht, um entsalztes Wasser zu erzeugen,
• eine Leitung (6) für entsalztes Wasser, in die das entsalzte Wasser fließt, und
• ein Vakuumsystem mit einem Ejektor (8) zur Erzeugung von Vakuum mit einem Mitteldruckdampf, der von einer Gegendruck-Dampfturbine (7) durch eine Mitteldruckdampf-Leitung (12) geliefert wird,
**dadurch gekennzeichnet, dass**
- ein Entspannungsgefäß (11) vorgesehen ist, das durch Verwendung des Kessellaugen-Wassers (10) des Abhitze-Dampferzeugers (25) Mitteldruckdampf erzeugt,
- der Mitteldruckdampf in die Mitteldruckdampf-Leitung (12) eingespeist wird und
- das heiße Wasser, das nach der Erzeugung des Mitteldruckdampfs im Entspannungsgefäß (11) übrig bleibt, mit Meerwasser gemischt wird, das von der Salzwasser-Heizvorrichtung (4) in die Meerwasserleitung (14) geleitet wird.

2. Vorrichtung zur Entsalzung von Meerwasser nach Anspruch 1, **dadurch gekennzeichnet, dass** das Entspannungsgefäß (11) so ausgelegt ist, dass Kessellaugen-Wasser (10) versprüht und verdampft wird, um chemische Stoffe zu entfernen, die dem für die Energieerzeugung verwendeten Wasser zugesetzt werden.

## Revendications

1. Appareil de dessalement de l'eau de mer utilisant de l'eau de purge (10) d'un générateur de vapeur à récupération de chaleur (25) d'une centrale électrique à cycle combiné (1), comprenant
• un dispositif de chauffage de saumure (4) destiné à chauffer la saumure avec une vapeur à basse pression fournie par une turbine à vapeur à basse pression (2) d'une centrale électrique à cycle combiné (1),
• la saumure étant soumise à une évaporation instantanée pendant que la saumure traverse les étages respectifs d'un évaporateur à plusieurs étages (20) via une conduite d'eau de mer (14) pour produire de l'eau dessalée,
• une conduite d'eau dessalée (6) pour recevoir l'eau dessalée, et
• un système à vide incluant un éjecteur (8) destiné à créer le vide avec une vapeur à moyenne pression fournie par une turbine à vapeur à contrepression (7) à travers une conduite de vapeur à moyenne pression (12),
**caractérisé en ce que**
- un ballon de flashing (11) est fourni pour produire une vapeur à moyenne pression en utilisant l'eau de purge (10) du générateur de vapeur à récupération de chaleur (25),
- la vapeur à moyenne pression est fournie à la conduite de vapeur à moyenne pression (12),
et
- l'eau chaude restant après la production de la vapeur à moyenne pression du ballon de flashing (11) est mélangée avec l'eau de mer évacuée du dispositif de chauffage de saumure (4) vers la conduite d'eau de mer (14).

2. Appareil de dessalement de l'eau de mer selon la revendication 1, **caractérisé en ce que** le ballon de flashing (11) est conçu pour vaporiser et évaporer l'eau de purge (10) afin de supprimer les matières chimiques ajoutées à l'eau pour la production d'électricité.
